# EUROPÄISCHE PATENTSCHRIFT

(11) **EP 3 669 104 B1**
(45) Veröffentlichungstag und Bekanntmachung des Hinweises auf die Patenterteilung: **20.12.2023**
(21) Anmeldenummer: 18756392.9
(22) Anmeldetag: 09.08.2018
(51) Int. Cl.: F16J 15/34

(54) **GLEITRINGDICHTUNGSANORDNUNG SOWIE GLEITRINGDICHTUNGS-BAUKASTEN**
SLIP RING SEALING ARRANGEMENT AND SLIP RING SEALING KIT
SYSTÈME DE GARNITURE MÉCANIQUE ET MODULE À GARNITURE MÉCANIQUE

(30) Priorität: 14.08.2017 DE 102017214132
(43) Veröffentlichungstag der Anmeldung: 24.06.2020
(73) Patentinhaber: EagleBurgmann Germany GmbH & Co. KG, 82515 Wolfratshausen (DE)
(72) Erfinder: ONGERTH, Doris, 82538 Geretsried (DE); RIES, Wolfgang, 82433 Bad Kohlgrub (DE)
(74) Vertreter: Hoefer & Partner Patentanwälte mbB
(86) Internationale Anmeldenummer: PCT/EP2018/071609
(87) Internationale Veröffentlichungsnummer: WO 2019/034519

(56) Entgegenhaltungen:
- WO-A1-2017/119882
- US-A1- 2002 060 429
- US-A1- 2002 096 836
- US-A1- 2006 097 456
- US-A1- 2008 093 806

## Beschreibung

Die Erfindung betrifft eine Gleitringdichtungsanordnung sowie einen Gleitringdichtungs-Baukasten, bei welchem insbesondere ein problemloser Austausch von Gleitringen und/oder Nebendichtungen möglich ist.

Gleitringdichtungsanordnungen sind aus dem Stand der Technik in unterschiedlichen Ausgestaltungen bekannt. Dabei umfassen Gleitringdichtungsanordnungen eine Gleitringdichtung mit einem rotierenden Gleitring und einem stationären Gleitring, welche zwischen sich einen Dichtspalt definieren. Gleitringdichtungsanordnungen dichten üblicherweise eine Produktseite von einer Atmosphärenseite an einer Welle oder dgl. ab. Hierbei kann eine Drehmomentübertragung von der rotierenden Welle auf den rotierenden Gleitring mittels eines rotierenden Gleitringträgers erfolgen. Eine Verbindung zwischen dem Gleitringträger und dem rotierenden Gleitring erfolgt beispielsweise über Zylinderstifte, welche mittels einer Presspassung im Gleitringträger und im rotierenden Gleitring angeordnet sind.

Eine derartige Gleitringdichtungsanordnung ist beispielsweise aus der DE 102015211223 B3 bekannt. Durch diese Presspassverbindung können jedoch unerwünschte Spannungen in den rotierenden Gleitring eingebracht werden, welche zu Unebenheiten an der zum stationären Gleitring gerichteten Gleitfläche des rotierenden Gleitrings führen können. Ferner ist es auch bekannt, dass Gleitringträger auf den rotierenden Gleitring thermisch aufgeschrumpft werden. Hierbei wird der Gleitringträger erwärmt und dehnt sich aus, so dass der rotierende Gleitring an einer radialen Innenseite des Gleitringträgers angebracht werden kann und durch den Abkühlungsprozess des Gleitringträgers eine drehfeste Verbindung zwischen Gleitringträger und rotierendem Gleitring hergestellt wird. Auch hierdurch können sich unerwünschte Spannungen auf den Gleitring ergeben, was bei der Produktion zu einem hohen Ausschussanteil führen kann oder eine Lebensdauer der Gleitringdichtung durch unerwünschte Spannungen im rotierenden Gleitring reduzieren kann.

Aus der US 2006/097456 A1, der US 2002/096836 A1 und der US 2002/060429 A1 ist ferner eine Gleitringdichtungsanordnung mit den Merkmalen des Oberbegriffs des Anspruchs 1 bekannt.

Es ist daher Aufgabe der vorliegenden Erfindung, eine Gleitringdichtungsanordnung bereitzustellen, welche bei einfachem Aufbau und einfacher, kostengünstiger Herstellbarkeit eine lange Lebensdauer aufweist und insbesondere eingebrachte Spannungen in den Gleitring vermeiden kann. Ferner ist es Aufgabe der vorliegenden Erfindung, einen Gleitringdichtungs-Baukasten bereitzustellen, bei dem ein standardisierter Gleitringträger mit verschiedensten rotierenden Gleitringen und unterschiedlichen Nebendichtungselementen verwendet werden kann.

Diese Aufgabe wird durch eine Gleitringdichtungsanordnung mit den Merkmalen des Anspruchs 1 bzw. einen Gleitringdichtungs-Baukasten mit den Merkmalen des Anspruchs 10 gelöst.

Die Unteransprüche zeigen bevorzugte Weiterbildungen der Erfindung.

Die erfindungsgemäße Gleitringdichtungsanordnung mit den Merkmalen des Anspruchs 1 weist den Vorteil auf, dass auf besonders kostengünstige Weise Gleitringdichtungsanordnungen für unterschiedlichste Einsatzzwecke bereitgestellt werden können. Hierbei ist der Aufbau der Gleitringdichtungsanordnung derart, dass ein Baukastensystem realisiert werden kann, wobei insbesondere Gleitringe und/oder Nebendichtungen der Gleitringdichtungsanordnung für verschiedenste Einsatzzwecke austauschbar sind. Hierdurch ergibt sich eine sehr große Kosteneinsparung bei der Herstellung der Gleitringdichtungsanordnung. Dies wird erfindungsgemäß dadurch erreicht, dass die Gleitringdichtungsanordnung eine Gleitringdichtung mit rotierendem und stationärem Gleitring umfasst, welche zwischen sich einen Dichtspalt definieren. Ferner ist ein Gleitringträger vorgesehen, welcher am rotierenden Gleitring angeordnet ist. Dabei ist der rotierende Gleitring mit Spiel in den Gleitringträger eingelegt. Weiterhin ist wenigstens ein Mitnehmerelement vorgesehen, welches zwischen dem rotierenden Gleitring und dem Gleitringträger angeordnet ist und eingerichtet ist, Drehmoment vom Gleitringträger auf den rotierenden Gleitring zu übertragen. Der rotierende Gleitring weist dabei eine erste Aussparung auf und der Gleitringträger weist eine zweite Aussparung auf. Hierbei ist das Mitnehmerelement mit Spiel in die erste Aussparung im rotierenden Gleitring und ebenfalls mit Spiel in die zweite Aussparung im Gleitringträger eingelegt. Somit wird vermieden, dass eine Drehmomentübertragung vom Gleitringträger auf den rotierenden Gleitring beispielsweise wie im Stand der Technik mittels Verstiftungen mit Presspassungen oder Schrumpfverbindungen vorgesehen werden, welche zur Einleitung von unerwünschten Spannungen oder Beschädigungen in den rotierenden Gleitring führen können. Hierdurch kann insbesondere eine Ebenheit der Gleitfläche des rotierenden Gleitrings nicht nachteilig beeinflusst werden, wobei insbesondere die Lebensdauer der Gleitringdichtung reduziert werden würde. Erfindungsgemäß kann durch den lose eingelegten, rotierenden Gleitring insbesondere auch eine schnelle und einfache Montage und auch ein Austausch des rotierenden Gleitrings auf einfache Weise ermöglicht werden. Das Spiel zwischen dem Mitnehmerelement und dem Gleitringträger sowie das Spiel zwischen Mitnehmernut und dem rotierenden Gleitring ist dabei sehr klein gewählt, insbesondere maximal 1 mm, um beim Anfahren der Gleitringdichtungsanordnung möglichst nur einen kurzen Spielweg überbrücken zu müssen. Dadurch kann ein Anfahrstoß aufgrund des Spiels vermieden werden.

Besonders bevorzugt ist das Mitnehmerelement derart ausgebildet, dass es einen zylindrischen Grundkörper und einen viereckigen, insbesondere quadratischen, Kontaktbereich aufweist. Dabei sind sowohl der zylindrische Grundkörper als auch der viereckige Kontaktbereich, jeweils mit einem kleinen Spiel im Gleitringträger bzw. im rotierenden Gleitring angeordnet. Vorzugsweise ist der viereckige Kontaktbereich in einer entsprechend der Form des Mitnehmerelements ausgebildeten Aussparung im rotierenden Gleitring angeordnet. Hierdurch kann eine großflächige Anlagefläche zwischen dem viereckigen Kontaktbereich des Mintnehmerelements und dem rotierenden Gleitring erreicht werden.

Gemäß einer weiteren bevorzugten Ausgestaltung der Erfindung weist der Gleitringträger eine erste Ringnut und eine zweite Ringnut auf. In der ersten Ringnut ist eine erste Nebendichtung angeordnet und in der zweiten Ringnut ist eine zweite Nebendichtung angeordnet. Die erste und zweite Nebendichtung ist dabei jeweils ein O-Ring mit einem kreisförmigen Querschnitt oder alternativ ein elastischer Formring mit einem Querschnitt, welcher dem Querschnitt der ersten und zweiten Ringnut entspricht. Somit kann beispielsweise für sterile Anwendungen in der ersten und zweiten Ringnut jeweils ein Formring eingesetzt werden, welche die sterilen Anforderungen beispielsweise in der Lebensmittelindustrie bei der Anwendung der Gleitringdichtungsanordnung als Pumpe erfüllen kann. Durch die Verwendung der Formringe in der ersten und zweiten Ringnut können insbesondere Bereiche in den beiden Ringnuten vermieden werden, welche nicht durch Material des Nebendichtelements ausgefüllt sind. Für andere Anwendungen können kostengünstigere O-Ringe verwendet werden, bei denen derartige, nicht durch das Material der O-Ringe ausgefüllte Bereiche vorhanden sein können, da hier keine sterilen Anforderungen zu erfüllen sind. Somit kann durch Austausch der Nebendichtungen in dem Gleitringträger eine schnelle und kostengünstige Anpassung der Gleitringdichtungsanordnung an unterschiedliche Anwendungsfälle erreicht werden.

Weiter bevorzugt umfasst die Gleitringdichtungsanordnung eine Hülse, an welcher der Gleitringträger angeordnet ist. Die Hülse weist eine Nut auf und der Gleitringträger weist einen Drehmomenteinleitungsbereich auf. Der Drehmomenteinleitungsbereich ist einstückig am Gleitringträger ausgebildet und steht in die Nut der Hülse vor. Hierdurch kann eine Drehmomentübertragung von der Hülse auf den Gleitringträger ermöglicht werden. Die Hülse ist vorzugsweise direkt auf einem rotierenden Bauteil, insbesondere einer Welle, angeordnet und auf der Welle fixiert.

Weiter bevorzugt ist die erste Aussparung im rotierenden Gleitring, in welchem das Mitnehmerelement teilweise angeordnet ist, ein durchgehender, in radialer Richtung zur Mittelachse des rotierenden Gleitrings durchgehender erster Radialschlitz. Dieser kann besonders kostengünstig im rotierenden Gleitring vorgesehen werden.

Weiter bevorzugt ist die Nut in der Hülse ein in radialer Richtung zur Mittelachse der Hülse durchgehender zweiter Radialschlitz. Auch dieser zweite Radialschlitz kann besonders einfach und kostengünstig vorzugsweise an einem freien Ende der Hülse, vorgesehen werden.

Gemäß einer weiteren bevorzugten Ausgestaltung der Erfindung ist die zweite Aussparung im Gleitringträger zur Aufnahme des zylindrischen Teils des Mitnehmerelements eine Zylinderbohrung mit einem etwas größeren Durchmesser als ein Durchmesser des zylindrischen Grundkörpers des Mitnehmerelements. Hierdurch kann das Spiel des Mitnehmerelements in der zweiten Aussparung des Gleitringträgers sichergestellt werden.

Weiter bevorzugt umfasst die Gleitringdichtungsanordnung ferner ein Federelement, welches zwischen dem Gleitringträger und dem rotierenden Gleitring angeordnet ist. Das Federelement ist vorzugsweise eine Spiralfeder.

Da der rotierende Gleitring lose, d.h., mit Spiel, im Gleitringträger angeordnet ist, ist es ferner möglich, dass der rotierende Gleitring eine diamantbeschichtete Gleitfläche aufweist, da keinerlei Spannungen durch das Halten des rotierenden Gleitrings im Gleitringträger eingebracht werden.

Vorzugsweise ist die erste Ringnut des Gleitringträgers in Radialrichtung über dem rotierenden Gleitring angeordnet, so dass der rotierende Gleitring durch das in der ersten Ringnut angeordnete erste Nebendichtelement etwas fixiert wird.

Ferner betrifft die vorliegende Erfindung einen Gleitringdichtungs-Baukasten, umfassend eine erfindungsgemäße Gleitringdichtungsanordnung mit einem rotierenden Gleitring, ausgewählt aus der Gruppe umfassend einen Kohlering, einen Keramikring oder einen diamantbeschichteten Gleitring und/oder mit einer ersten und zweiten Nebendichtung zur Abdichtung am Gleitringträger, ausgewählt aus der Gruppe umfassend O-Ringe oder elastische Formringe mit einem Querschnitt entsprechend der ersten oder zweiten Ausnehmung im Gleitringträger.

Die erfindungsgemäße Gleitringdichtungsanordnung wird besonders bevorzugt in Pumpen bei Lebensmittelanwendungen, beispielsweise zur Förderung von Getränken oder in Pharmaanwendungen bei Medizinprodukten, bei denen eine sterile Auslegung der Gleitringdichtung notwendig ist, verwendet. Weiterhin können erfindungsgemäß besonders gut auch Medien mit faserigen Bestandteilen, beispielsweise in der Zellstoffindustrie, durch die erfindungsgemäße Gleitringdichtungsanordnung abgedichtet werden. Durch das Baukastensystem kann die Gleitringdichtungsanordnung jeweils individuell auf den jeweiligen Einsatzzweck ausgelegt werden, so dass sich ein breites Einsatzspektrum der Gleitringdichtungsanordnung ergibt.

Nachfolgend werden bevorzugte Ausführungsbeispiele der Erfindung unter Bezugnahme auf die begleitende Zeichnung im Detail beschrieben. In der Zeichnung ist:
- Fig. 1: eine schematische Schnittansicht einer Gleitringdichtungsanordnung gemäß einem ersten Ausführungsbeispiel der Erfindung,
- Fig. 2: eine schematische, vergrößerte Schnittansicht eines Mitnehmerelements von Fig. 1,
- Fig. 3: eine perspektivische Ansicht des Mitnehmerelements von Fig. 2,
- Fig. 4: eine geschnittene, perspektivische Ansicht eines Gleitringträgers von Fig. 1, und
- Fig. 5: eine schematische Schnittansicht einer Gleitringdichtungsanordnung gemäß einem zweiten Ausführungsbeispiel der Erfindung.

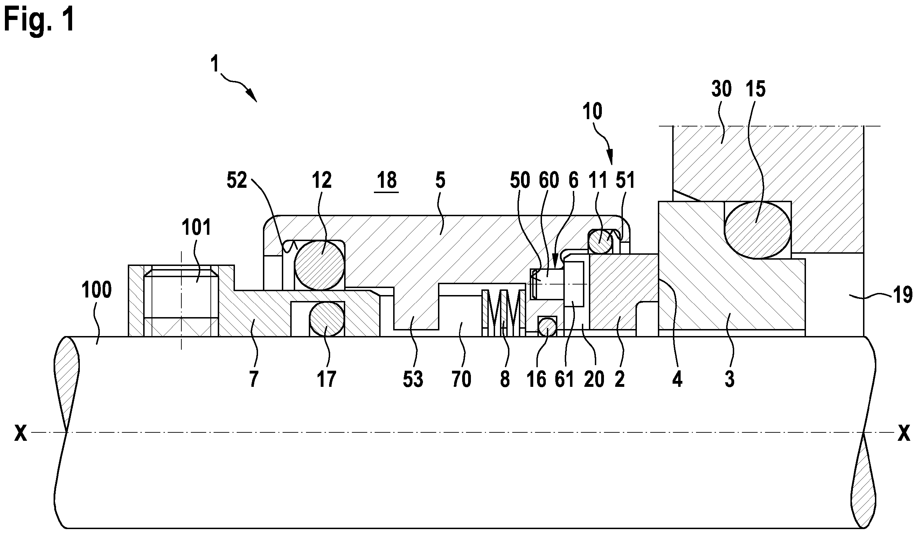

Nachfolgend wird unter Bezugnahme auf die Fig. 1 bis 4 eine Gleitringdichtungsanordnung 1 gemäß einem ersten bevorzugten Ausführungsbeispiel der Erfindung im Detail beschrieben.

Wie aus Fig. 1 ersichtlich ist, umfasst die Gleitringdichtungsanordnung 1 eine Gleitringdichtung 10 mit einem rotierenden Gleitring 2 und einem stationären Gleitring 3. Der rotierende Gleitring 2 und der stationäre Gleitring 3 definieren zwischen sich einen Dichtspalt 4.

Der rotierende Gleitring 2 weist eine erste Aussparung 20 auf, welche in diesem Ausführungsbeispiel als radial durchgehender Schlitz ausgebildet ist. Die erste Aussparung 20 verläuft dabei in Radialrichtung senkrecht zu einer Axialrichtung X-X der Gleitringdichtungsanordnung an einer Rückseite des rotierenden Gleitrings, welche von der zum stationären Gleitring 3 gerichteten Gleitfläche des rotierenden Gleitrings 2 entgegengesetzt ist.

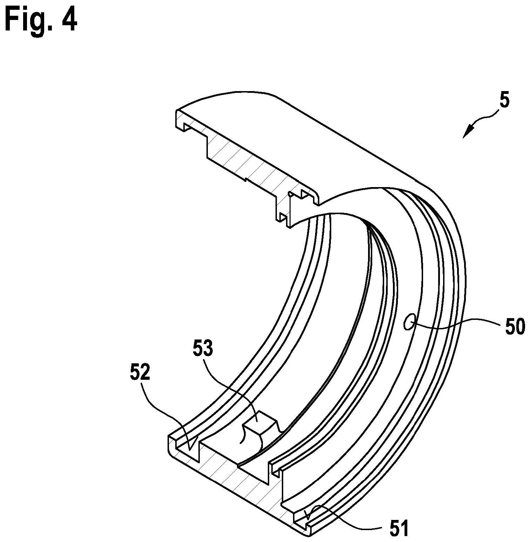

Die Gleitringdichtungsanordnung 1 umfasst ferner einen Gleitringträger 5, welcher aus einem metallischen Material hergestellt ist. Der Gleitringträger 5 ist im Detail auch aus Fig. 4 ersichtlich. Der Gleitringträger 5 umfasst eine erste Ringnut 51 und eine zweite Ringnut 52. Ferner umfasst der Gleitringträger 5 eine zweite Aussparung 50. Die zweite Aussparung 50 ist in diesem Ausführungsbeispiel eine Bohrung.

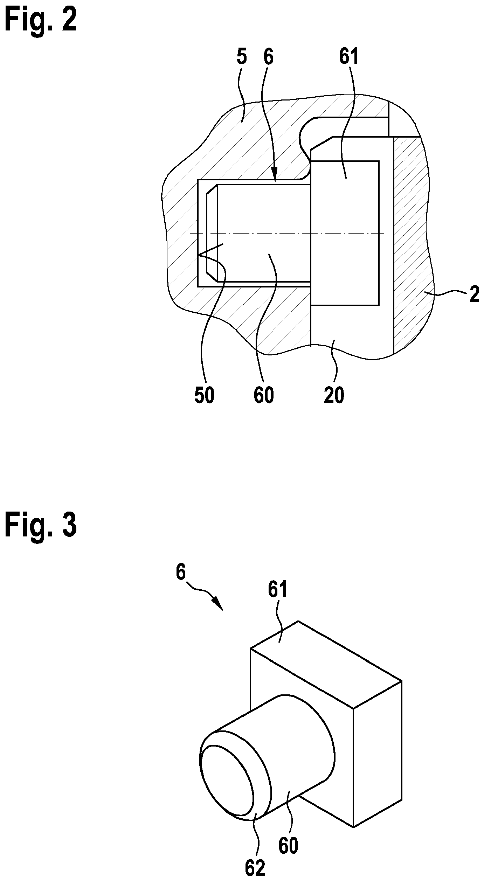

Ferner ist ein Mitnehmerelement 6 vorgesehen, welches in den Fig. 2 und 3 im Detail dargestellt ist. Das Mitnehmerelement 6 weist einen zylindrischen Grundkörper 60 und einen viereckigen Kontaktbereich 61 auf. Am freien Ende des zylindrischen Grundkörpers 60 ist eine Fase 62 vorgehen. Im montierten Zustand ist der zylindrische Grundkörper 60 in der zweiten Aussparung 50 des Gleitringträgers 5 angeordnet und der viereckige Kontaktbereich 61 ist in der ersten Aussparung 20 im rotierenden Gleitring 2 angeordnet. Hierbei weist das Mitnehmerelement 6 sowohl in der ersten Aussparung 20 als auch in der zweiten Aussparung 50 ein Spiel in allen Richtungen, d.h., axial, radial und in Umfangsrichtung, auf. Durch das Mitnehmerelement 6 kann ein Drehmoment vom Gleitringträger 5 auf den rotierenden Gleitring 2 übertragen werden.

Wie weiter aus Fig. 1 ersichtlich ist, ist die erste Ringnut 51 im Gleitringträger 5 radial außerhalb des rotierenden Gleitrings 2 direkt über dem rotierenden Gleitring 2 vorgesehen. In der ersten Ringnut 51 ist eine erste Nebendichtung angeordnet, welche in diesem Ausführungsbeispiel ein erster O-Ring 11 ist.

Weiter umfasst die Gleitringdichtungsanordnung 1 ein Federelement 8, welches zwischen einer Hülse 7 und dem Gleitringträger 5 angeordnet ist. Die Hülse 7 ist fest mit einem rotierenden Bauteil, in diesem Ausführungsbeispiel einer Welle 100, verbunden. Das Federelement 8 spannt den rotierenden Gleitring 2 in Axialrichtung X-X über den Gleitringträger 5 zum stationären Gleitring 3 vor.

Am Gleitringträger 5 ist ferner noch einstückig ein Drehmomentübertragungsbereich 53 vorgesehen, welcher, wie aus Figur 1 ersichtlich ist, in eine Nut 70 in der Hülse 7 vorsteht. Die Nut 70 ist an einem in Richtung zum rotierenden Gleitring 2 gerichteten freien Ende der Hülse 7 vorgesehen und ist in Radialrichtung durchgehend ausgebildet. Die Hülse 7 ist fest auf der Welle 100 fixiert, beispielsweise durch eine Klemmverbindung oder wie in Fig. 1 dargestellt durch einen Gewindestift 101.

In der zweiten Ringnut 52 des Gleitringträgers 50 ist eine zweite Nebendichtung in Form eines zweiten O-Rings 12 angeordnet. Dadurch wird der Gleitringträger 5 gegenüber der Hülse 7 abgedichtet.

Der stationäre Gleitring 3 ist an einem Gehäuse 30 angeordnet und durch einen dritten O-Ring 15 abgedichtet.

Ferner weist die Gleitringdichtungsanordnung 1 am Gleitringträger 5 einen vierten O-Ring 16 auf, welcher an der Welle 100 abdichtet und einen fünften O-Ring 17, welcher an der Hülse 7 angeordnet ist und ebenfalls an der Welle 100 abdichtet.

Die Gleitringdichtungsanordnung 1 dichtet eine Produktseite 18 von einer Atmosphärenseite 19 ab. In diesem Ausführungsbeispiel ist die Gleitringdichtungsanordnung 1 an einer Welle 100 angeordnet, welche eine Pumpe antreibt. Hierbei ist keine sterile Anwendung vorgesehen, da in der ersten Ringnut 51 und der zweiten Ringnut 52 Bereiche vorgesehen sind, welche nicht durch den ersten O-Ring oder den zweiten O-Ring 12 ausgefüllt sind.

Da der erste O-Ring 11 radial über dem rotierenden Gleitring 2 angeordnet ist, wird der mit Spiel in den Gleitringträger 5 eingelegte rotierende Gleitring 2 etwas fixiert. Da weiterhin auch das Mitnehmerelement 6 sowohl am zylindrischen Grundkörper 60 als auch am viereckigen Kontaktbereich 61 Spiel aufweist, werden keine Spannungen durch Aufschrumpfen oder Presspassungen zwischen dem Mitnehmerelement und dem rotierenden Gleitring 2 auf den rotierenden Gleitring 2 übertragen. Dadurch kann der rotierende Gleitring 2 einfach ausgetauscht werden bzw. die Gleitringdichtungsanordnung ohne große Kosten durch einfachen Austausch des rotierenden Gleitrings 2 mit unterschiedlichen Materialien für den rotierenden Gleitring 2 ausgelegt werden. Weiterhin können auf einfache Weise auch der erste O-Ring 11 und der zweite O-Ring 12 durch sterile, elastische Formdichtungen ausgetauscht werden. Somit wird ein Gleitringdichtungs-Baukastensystem bereitgestellt, bei dem die Nebendichtungen am Gleitringträger und der rotierende Gleitring 2 je nach Anwendungsfall einfach ausgetauscht werden können, da diese lediglich in den Gleitringträger 5 eingelegt sind.

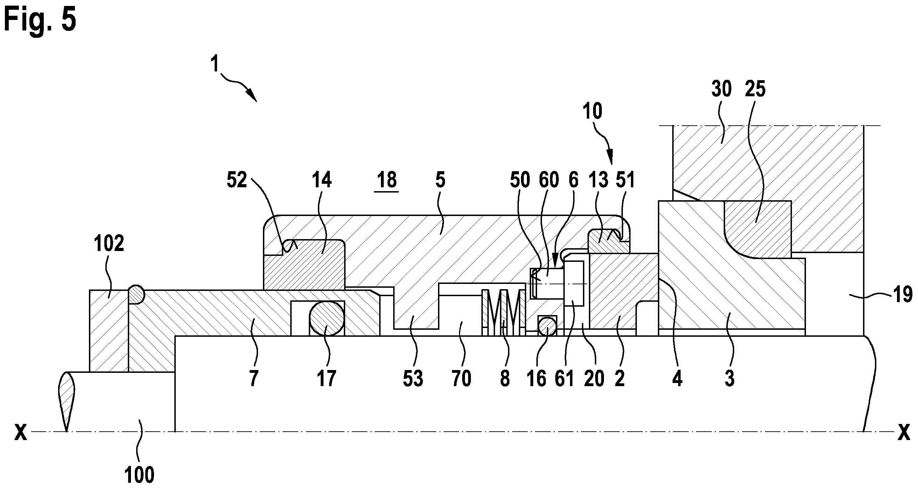

Fig. 5 zeigt eine Gleitringdichtungsanordnung gemäß einem zweiten Ausführungsbeispiel der Erfindung. Beim zweiten Ausführungsbeispiel sind im Unterschied zum ersten Ausführungsbeispiel das erste und zweite Nebendichtelement am Gleitringträger 5 nicht als O-Ringe ausgebildet, sondern als erster elastischer Formring 13 und zweiter elastischer Formring 14. Der elastische Formring 13 ist in der ersten Ringnut 51 im Gleitringträger angeordnet und der zweite elastische Formring 14 ist in der zweiten Ringnut 52 im Gleitringträger angeordnet. Durch die Verwendung der elastischen Formringe können alle Querschnittsbereiche der ersten und zweiten Ringnut 51, 52 durch ein elastisches Material der Formringe ausgefüllt werden. Weiterhin ist auch am stationären Gleitring 3 ein dritter elastischer Formring 25 angeordnet. Die Hülse 7 ist an einem Wellenabsatz angeordnet und kann auf der Welle geklemmt werden oder mit einem Zusatzring 102 und einem gequetschten O-Ring 103 fixiert werden. Dadurch ist die Gleitringdichtungsanordnung 1 des zweiten Ausführungsbeispiels für sterile Anwendungen geeignet, beispielsweise in der Pharmaindustrie oder in der Lebensmittelindustrie.

Somit kann erfindungsgemäß ein kostengünstiges Gleitringdichtungs-Baukastensystem bereitgestellt werden, welches einen gemeinsamen Gleitringträger 5, eine gemeinsame Hülse 7, ein gemeinsames Federelement 8 und ein gemeinsames Mitnehmerelement 9 aufweist. Da das Mitnehmerelement 6 und der rotierende Gleitring 2 nur in den Gleitringträger 5 eingelegt sind, kann auch eine besonders einfache und kostengünstige Montage bereitgestellt werden, ohne Gefahr einer Beschädigung des rotierenden Gleitrings bei der Montage, wie dies beispielsweise bei einem thermischen Schrumpfvorgang im Stand der Technik zur Fixierung des rotierenden Gleitrings möglich ist.

### Bezugszeichenliste

- 1: Gleitringdichtungsanordnung
- 2: rotierender Gleitring
- 3: stationärer Gleitring
- 4: Dichtspalt
- 5: Gleitringträger
- 6: Mitnehmerelement
- 7: Hülse
- 8: Federelement
- 10: Gleitringdichtung
- 11: erster O-Ring
- 12: zweiter O-Ring
- 13: erster elastischer Formring
- 14: zweiter elastischer Formring
- 15: dritter O-Ring
- 16: vierter O-Ring
- 17: fünfter O-Ring
- 18: Produktseite
- 19: Atmosphärenseite
- 20: erste Aussparung im rotierenden Gleitring
- 25: dritter elastischer Formring
- 30: Gehäuse
- 50: zweite Aussparung im Gleitringträger
- 51: erste Ringnut
- 52: zweite Ringnut
- 53: Drehmomentübertragungsbereich
- 60: zylindrischer Grundkörper
- 61: viereckiger Kontaktbereich
- 62: Fase
- 70: Nut
- 100: Welle
- 101: Gewindestift
- 102: Zusatzring
- 103: gequetschter O-Ring
- X-X: Axialrichtung

## Patentansprüche

1. Gleitringdichtungsanordnung, umfassend:
- eine Gleitringdichtung (10) mit einem rotierenden Gleitring (2) und einem stationären Gleitring (3), welche zwischen sich einen Dichtspalt (4) definieren,
- einen Gleitringträger (5), welcher am rotierenden Gleitring (2) angeordnet ist,
- wenigstens ein Mitnehmerelement (6), welches zwischen dem rotierenden Gleitring (2) und dem Gleitringträger (5) angeordnet ist und eingerichtet ist, Drehmoment vom Gleitringträger (5) auf den rotierenden Gleitring (2) zu übertragen,
- wobei der rotierende Gleitring (2) mit Spiel in den Gleitringträger (5) angeordnet ist,
- wobei der rotierende Gleitring (2) eine erste Aussparung (20) aufweist, und
- der Gleitringträger (5) eine zweite Aussparung (50) aufweist, und
- das Mitnehmerelement (6) mit Spiel in der ersten Aussparung (20) angeordnet ist,
**dadurch gekennzeichnet, dass**
das Mitnehmerelement (6) mit Spiel in der zweiten Aussparung (50) angeordnet ist.

2. Gleitringdichtungsanordnung nach Anspruch 1, wobei das Mitnehmerelement (6) einen zylindrischen Grundkörper (60) und einen viereckigen Kontaktbereich (61) aufweist.

3. Gleitringdichtungsanordnung nach einem der vorhergehenden Ansprüche, wobei der Gleitringträger (5) eine erste Ringnut (51) und eine zweite Ringnut (52) aufweist, wobei in der ersten Ringnut (51) eine erste Nebendichtung angeordnet ist und in der zweiten Ringnut (52) eine zweite Nebendichtung angeordnet ist, wobei die erste und zweite Nebendichtung jeweils ein O-Ring (11, 12) mit kreisförmigem oder elliptischem Querschnitt ist oder wobei die erste und zweite Nebendichtung ein elastischer Formring (13, 14) mit einem Querschnitt entsprechend einem Querschnitt der ersten und zweiten Ringnut (51, 52) ist.

4. Gleitringdichtungsanordnung nach einem der vorhergehenden Ansprüche, ferner umfassend eine Hülse (7), wobei der Gleitringträger (5) an der Hülse (7) angeordnet ist, wobei die Hülse (7) eine Nut (70) aufweist und mit dem Gleitringträger (5) über einen Drehmomentübertragungsbereich (53) verbunden ist, wobei der Drehmomentübertragungsbereich (53) einstückig mit dem Gleitringträger (5) ausgebildet ist und in die Nut (70) der Hülse (7) vorsteht, um eine Drehmomentübertragung von der Hülse (7) auf den Gleitringträger (5) zu ermöglichen.

5. Gleitringdichtungsanordnung nach einem der vorhergehenden Ansprüche, wobei die erste Aussparung (20) im rotierenden Gleitring (2) ein in radialer Richtung zur Axialrichtung (X-X) durchgehender erster Radialschlitz ist.

6. Gleitringdichtungsanordnung nach einem der vorhergehenden Ansprüche, wobei die Nut (70) in der Hülse (7) ein radialer Richtung zur Axialrichtung (X-X) durchgehender zweiter Radialschlitz ist.

7. Gleitringdichtungsanordnung nach einem der vorhergehenden Ansprüche, wobei die zweite Aussparung (50) des Gleitringträgers (5) eine Zylinderbohrung mit einem Durchmesser derart ist, dass der zylindrische Grundkörper (60) des Mitnehmerelements (6) mit Spiel in der Zylinderbohrung angeordnet ist.

8. Gleitringdichtungsanordnung nach einem der vorhergehenden Ansprüche, ferner umfassend ein Federelement (8), welches zwischen dem Gleitringträger (5) und dem rotierenden Gleitring (2) angeordnet ist.

9. Gleitringdichtungsanordnung nach einem der vorhergehenden Ansprüche, wobei der rotierende Gleitring (2) eine mit Diamant beschichtete Gleitfläche aufweist.

10. Gleitringdichtungs-Baukasten, umfassend eine Gleitringdichtungsanordnung nach einem der vorhergehenden Ansprüche,
- wobei der rotierende Gleitring (2) ausgewählt ist aus der Gruppe umfassend einen Kohlering oder einen Keramikring oder einen Gleitring mit diamantbeschichteter Gleitfläche und/oder
- wobei die erste und/oder zweite Nebendichtung zur Abdichtung am Gleitringträger (5) ausgewählt ist aus der Gruppe umfassend O-Ringe mit kreisförmigem oder elliptischen Querschnitt oder elastischen Formringen mit einem Querschnitt entsprechend dem Querschnitt der ersten und zweiten Ringnut im Gleitringträger (5).

## Claims

1. A mechanical seal arrangement comprising:
a mechanical seal (10) including a rotating sliding ring (2) and a stationary sliding ring (3) defining a sealing gap (4) therebetween,
a sliding ring carrier (5), which is arranged on the rotating sliding ring (2),
at least one driver element (6), which is arranged between the rotating sliding ring (2) and the sliding ring carrier (5) and is adapted to transmit a torque from the sliding ring carrier (5) to the rotating sliding ring (2),
wherein the rotating sliding ring (2) is clearance-fitted into the sliding ring carrier (5),
wherein the rotating sliding ring (2) comprises a first recess (20), and the sliding ring carrier (5) comprises a second recess (50), and
wherein the driver element (6) is clearance-fitted into the first recess (20) **characterized in that**
the driver element (6) is clearance-fitted into the second recess (50).

2. The mechanical seal arrangement according to claim 1, wherein the driver element (6) comprises a cylindrical base body (60) and a square contact region (61).

3. The mechanical seal arrangement according to one of the preceding claims, wherein the sliding ring carrier (5) comprises a first annular groove (51) and a second annular groove (52), wherein a first secondary seal is arranged in the first annular groove (51) and a second secondary seal is arranged in the second annular groove (52), wherein each of said first and second secondary seal is an O-ring (11, 12) having circular or elliptical cross-section, or wherein each of said first and second secondary seal is an elastic shaped ring (13, 14) having a cross-section corresponding to a cross-section of said first and second annular groove (51, 52).

4. The mechanical seal arrangement according to one of the preceding claims, further comprising a sleeve (7), the sliding ring carrier (5) being arranged on the sleeve (7), wherein the sleeve (7) comprises a groove (70) and is connected to the sliding ring carrier (5) by means of a torque transmission portion (53), wherein the torque transmission region (53) is integrally formed with the sliding ring carrier (5) and projects into the groove (70) of the sleeve (7) to enable torque transmission from the sleeve (7) to the sliding ring carrier (5).

5. The mechanical seal arrangement according to one of the preceding claims, wherein the first recess (20) in the rotating mechanical seal (2) is a first radial slot, which is continuous in the radial direction with respect to the axial direction (X-X).

6. The mechanical seal arrangement according to one of the preceding claims, wherein the groove (70) in the sleeve (7) is a second radial slot, which is continuous in the radial direction with respect to the axial direction (X-X).

7. The mechanical seal arrangement according to one of the preceding claims, wherein the second recess (50) of the sliding ring carrier (5) is a cylindrical bore having a diameter such that the cylindrical base body (60) of the driver element (6) is clearance-fitted into the cylindrical bore.

8. The mechanical seal arrangement according to one of the preceding claims, further comprising a spring element (8) arranged between the sliding ring carrier (5) and the rotating mechanical seal (2).

9. The mechanical seal arrangement according to one of the preceding claims, said rotating sliding ring (2) having a diamond-coated sliding surface.

10. The mechanical seal kit comprising a mechanical seal arrangement according to one of the preceding claims,
wherein the rotating sliding ring (2) is selected from the group comprising a carbon ring or a ceramic ring or a sliding ring having a diamond-coated sliding surface and/or wherein the first and/or second secondary seal for sealing against the sliding ring carrier (5) is selected from the group comprising O-rings having circular or elliptical cross-sections or elastic form rings having a cross-section corresponding to the cross-section of the first and second annular groove in the sliding ring carrier (5).

## Revendications

1. Ensemble de garniture mécanique d'étanchéité comprenant :
- une garniture mécanique d'étanchéité (10) avec un anneau de glissement rotatif (2) et un anneau de glissement stationnaire (3), lesquels définissent entre eux une fente d'étanchéité (4),
- un support d'anneau de glissement (5), lequel est disposé sur l'anneau de glissement rotatif (2),
- au moins un élément d'entraînement (6), lequel est disposé entre l'anneau de glissement rotatif (2) et le support d'anneau de glissement (5) et est mis au point pour transmettre un couple de rotation du support d'anneau de glissement (5) sur l'anneau de glissement rotatif (2),
- dans lequel l'anneau de glissement rotatif (2) est disposé avec un jeu dans le support d'anneau de glissement (5),
- dans lequel l'anneau de glissement rotatif (2) présente un premier évidement (20), et
- le support d'anneau de glissement (5) présente un deuxième évidement (50), et
- l'élément d'entraînement (6) est disposé avec un jeu dans le premier évidement (20),
**caractérisé en ce que**
l'élément d'entraînement (6) est disposé avec un jeu dans le deuxième évidement (50).

2. Ensemble à garniture mécanique d'étanchéité selon la revendication 1, dans lequel l'élément d'entraînement (6) présente un corps de base cylindrique (60) et une zone de contact carrée (61).

3. Ensemble à garniture mécanique d'étanchéité selon l'une quelconque des revendications précédentes, dans lequel le support d'anneau de glissement (5) présente une première rainure annulaire (51) et une deuxième rainure annulaire (52), dans lequel un premier joint d'étanchéité secondaire est disposé dans la première rainure annulaire (51) et un deuxième joint d'étanchéité annulaire est disposé dans la deuxième rainure annulaire (52), dans lequel le premier et le deuxième joint d'étanchéité secondaire sont respectivement un joint torique (11, 12) avec une section transversale de forme circulaire ou elliptique ou dans lequel le premier et le deuxième joint d'étanchéité secondaire sont un anneau moulé élastique (13, 14) avec une section transversale correspondant à une section transversale de la première et de la deuxième rainure annulaire (51, 52).

4. Ensemble à garniture mécanique d'étanchéité selon l'une quelconque des revendications précédentes, comprenant en outre une douille (7), dans lequel le support d'anneau de glissement (5) est disposé sur la douille (7), dans lequel la douille (7) présente une rainure (70) et est reliée au support d'anneau de glissement (5) par l'intermédiaire d'une zone de transmission de couple de rotation (53), dans lequel la zone de transmission de couple de rotation (53) est réalisée d'un seul tenant avec le support d'anneau de glissement (5) et fait saillie dans la rainure (70) de la douille (7) pour permettre une transmission de couple de rotation de la douille (7) sur le support d'anneau de glissement (5).

5. Ensemble à garniture mécanique d'étanchéité selon l'une quelconque des revendications précédentes, dans lequel le premier évidement (20) dans l'anneau de glissement rotatif (2) est une première entaille radiale traversant dans la direction radiale vers la direction axiale (X-X).

6. Ensemble à garniture mécanique d'étanchéité selon l'une quelconque des revendications précédentes, dans lequel la rainure (70) dans la douille (7) est une deuxième entaille radiale traversant dans une direction radiale vers la direction axiale (X-X).

7. Ensemble à garniture mécanique d'étanchéité selon l'une quelconque des revendications précédentes, dans lequel le deuxième évidement (50) du support d'anneau de glissement (5) est un alésage cylindrique avec un diamètre de telle manière que le corps de base cylindrique (60) de l'élément d'entraînement (6) est disposé avec un jeu dans l'alésage cylindrique.

8. Ensemble à garniture mécanique d'étanchéité selon l'une quelconque des revendications précédentes, comprenant en outre un élément de ressort (8), lequel est disposé entre le support d'anneau de glissement (5) et l'anneau de glissement rotatif (2).

9. Ensemble à garniture mécanique d'étanchéité selon l'une quelconque des revendications précédentes, dans lequel l'anneau de glissement rotatif (2) présente une surface de glissement revêtue de diamant.

10. Ensemble de construction à garniture mécanique d'étanchéité comprenant un ensemble à garniture mécanique d'étanchéité selon l'une quelconque des revendications précédentes,
- dans lequel l'anneau de glissement rotatif (2) est choisi parmi le groupe comprenant un anneau en charbon ou un anneau en céramique ou un anneau de glissement avec une surface de glissement revêtue de diamant et/ou
- dans lequel le premier et/ou le deuxième joint d'étanchéité secondaire pour étanchéifier sur le support d'anneau de glissement (5) est choisi parmi le groupe comprenant des joints toriques avec une section transversale circulaire ou elliptique ou des anneaux moulés avec une section transversale correspondant à la section transversale de la première et de la deuxième rainure annulaire dans le support d'anneau de glissement (5).
